# EUROPEAN PATENT APPLICATION

(11) **EP 4 545 410 A1**
(43) Date of publication of application: **30.04.2025**
(21) Application number: 23205421.3
(22) Date of filing: 24.10.2023
(51) Int. Cl.: B64D 11/02

(54) **METHOD AND SYSTEM FOR OPERATING A PUMP AND VALVE IN A WATER SUPPLY SYSTEM OF AN AIRCRAFT**

(71) Applicant: Airbus Operations GmbH, 21129 Hamburg (DE)
(72) Inventor: Albers, Frederik, 21129 Hamburg (DE)

(57) **Abstract**

The present disclosure relates to a method for operating a water supply system (100) for an aircraft (1), as well as a corresponding water supply system (100) operating in accordance with the method and an aircraft (1) having such water supply system (100). The method includes two operation sequences of a pump (130, 132) and a valve (155), each sequence including a time delay between operation of the pump (130, 132) and operation of the valve (155).

## Description

The present disclosure generally relates to a method for operating a water supply system for an aircraft as well as a corresponding water supply system and aircraft. Particularly, the present disclosure relates to a method including operation sequences of the pump and valve including a time delay between operation of the pump and operation of the valve. Further disclosed are a water supply system having a controller performing such method and an aircraft having such water supply system.

A conventional water supply system in an aircraft comprises a main water tank and a central water pump conveying water into a network of pipes and ducts to all water consumers. The water pump is configured to pressurise the water in the network and keep a certain water pressure, usually predefined by a water consumer requiring the maximum pressure. Such conventional systems operate, for example, at approximately 2 or 3 bar.

In order to provide a sufficient water pressure and flow at the water consumer being the furthest from the central water pump, the central water pump has to be controlled to compensate for any pressure drop due to a long piping. Thus, a corresponding water supply system has to be designed with larger pipes (leading to more weight due to the pipes of larger diameter and the increased amount of water stored therein) and/or has to be operated with an increased pressure.

This, however, requires that any component installed in the water supply system has to be constructed in view of the maximum pressure provided by the central water pump. For instance, a valve has to drive against the water pressure (e.g., when closing the valve), which requires a larger motor actuating the valve. Thus, the weight of the entire water supply system further increases.

It is therefore an object of the present disclosure to provide a water supply system improved with respect to weight and operability.

This object is solved by the present invention as defined in the independent claims. Preferred embodiments are defined by the dependent claims.

According to a first aspect to better understand the present disclosure, a method for operating a water supply system for an aircraft comprises detecting a demand for water supply at a water consumer, and starting a first operation sequence of a pump and a valve associated with the water consumer. Detecting a water demand can mean a general requirement to provide water at the water consumer, such as flushing a toilet, activating a faucet or activating a dishwasher, refilling a buffer tank and the like. Only optionally, detection of a water demand may include detecting or determining an amount, pressure and/or flow of water required (demanded) by the associated water consumer.

The method further comprises detecting an end of the demand for water supply at the water consumer, and starting a second operation sequence of the pump and the valve. Each of the first and second operation sequences includes a time delay between operation of the pump and operation of the valve.

Thus, the valve can be operated, i.e. can be closed or opened, in dependence on an operating state of the pump, and vice versa. This allows designing the valve in a lighter fashion and/or install lighter valves, as they may not be constructed to operate at the maximum pressure during opening and closing. Particularly, during closing a valve the valve has to act against the pressure in the water supply system, which requires a high force and hence a heavy motor or other actuator.

Therefore, the entire water supply system will become lighter. As a mere example, in an aircraft, a large number of valves and other components of the water supply system are required, such as tens of valves. Reducing the weight of each valve significantly reduces the overall weight of the entire water supply system.

In addition, if the actuator of the valve has not to act against the maximum pressure in the water supply system, the energy consumption of the actuator is also reduced.

In an implementation variant, the second operation sequence may involve a plurality of valves. As a mere example, a plurality of valves may be installed in a particular branch of a water network and/or a plurality of valves may be installed with respect to a corresponding number of monuments (in a vehicle), each including at least one water consumer. The second operation sequence, hence, may include opening at least one of the plurality of valves, while the pump is still operating. The second operation sequence specifically includes operating the at least one of the plurality of valves in a manner that one valve is always in an open configuration, in order to avoid pressurising any duct in the water supply system and downstream of the pump. As a mere example, while one valve is brought into a closed configuration, the next one of the plurality of valves can be opened, i.e., the one valve is brought into the close configuration, when the next to one of the plurality of valves is already in a (partially) open configuration. It is to be understood that more than one valve can be brought into an open configuration, while one or more other valves are being closed.

In an implementation variant, the water supply system can be designed as a high pressure water supply system, for example, a system operating between 8 and 20 bar, preferably at approximately 15 bar. This is possible, as the operation of the pump and valve(s) are coordinated with the first and second operation sequences. The higher pressure allows reducing the size of the pipes and ducts, such as the inner diameter and, hence, the inner volume. This further reduces the weight of the entire water supply system, since the pipes and ducts may become lighter, and, particularly, the amount of water present inside of the pipes and ducts is less compared to conventional water supply systems.

In another implementation variant, the time delay can be set to operate the valve when the pump is operated with a reduced capacity. In other words, the time delay depends on a change of operation of the pump that is part of the first or second operation sequence. The reduced capacity means that the pump operates in a manner that the water supply system is not pressurised with the maximum pressure, but with a reduced pressure optimised for the operation of the valve. Likewise, a reduced capacity can (additionally or alternatively) mean a pump not operating with maximum conveyed volume flow and/or not at a maximum speed.

As a mere example, the time delay can be set based on a pump characteristic curve. Such pump characteristic curve can represent a volume flow, conveying speed of the water as well as a pressure at the outlet of the pump over time, such as after activation or deactivation of the pump. The volume flow, conveying speed and/or pressure will develop, either on an increasing curve or a decreasing curve. Likewise, a pump characteristic curve can reflect the relationship of the volume flow, conveying speed and/or outlet pressure over time based on a set speed of the pump. Thus, if the pump is controllable, for example, via input voltage, current, frequency, pulse width or the like, its pump parameter can influence the pump characteristic curve.

On the one hand, the time delay can have a starting point set by a change of operation of the pump, with either a stopped or running pump. Based on the pump characteristic curve the reduced capacity (relative to the maximum) can be reached after a certain time period, either from zero (stopped pump) or from a maximum operating state of the pump (or from an intermediate operating state of the pump between valve-optimised capacity and maximum capacity). In case of a stopped pump, the time delay can be rather short. On the other hand, the time delay can have a starting point set by a change of operation of the valve.

In an implementation variant, the second operation sequence can include reducing operation of the pump or deactivating the pump, and closing the valve after the time delay. The time delay allows a reduction of pressure, volume flow, and/or speed in the water supply system before the valve is operated. Thus, the valve in the second operation sequence is not to be operated against the full pressure or kinetic energy of the water in the water supply system. Closing the valve usually requires more energy, as the closing element of the valve has to move against the energy/force inherent to the conveyed water. It is to be understood that in this implementation variant, when combined with a plurality of valves "closing the valve" refers to the last valve in the sequence of valves to be opened and closed.

In a further implementation variant, the first operation sequence can include opening the valve and activating the pump after the time delay. Alternatively, the pump may already operate at a low level and after the time delay the pump operation is increased (i.e., increased pressure, flow, speed, etc.). This, particularly, allows to operate the valve at no pressure or a very low pressure.

In yet a further implementation variant, the first operation sequence can include activating the pump and opening the valve after the time delay. This allows providing a pre-pressurisation of the water supply system, for example, if a water consumer requires such pre-pressurisation (e.g., a faucet or toilet flushing device) or if opening the valve without pressure bears the risk of a reverse flow in a duct downstream of the valve and/or that air enters the water supply system. Since opening a valve is usually easier compared to closing the valve against the water and its inherent energy, the pre-pressurisation does not form an obstacle.

As a mere example, the time delay can be set depending on the pump characteristic curve, so that the valve is operated under predefined conditions (including pressure, flow, speed, etc. of the water). This reduces the risk of a failure of the valve due to operation of the valve under unfavourable conditions. As a mere example, for a particular pump it may be derivable from the pump characteristic curve that, if the stopped pump starts under full input voltage, current, etc., an outlet/output pressure of 2 bar will be reached after 0.5 seconds and full pressure of, for example, 15 bar will be reached after2 seconds. Thus, the time delay may be set based on the pump characteristic curve to a value between 0.2 and 1 second or the like.

It is to be understood that alternatively or additionally the time delay can be set depending on the water supply system in which the pump is installed. The pump operation (e.g. output and/or pressure development downstream of the pump) will be different for a pump not connected to any pipe at its outlet and a pump connected to a complex water supply system (network of pipes).

In an implementation variant, detecting an end of the demand for water supply can further trigger to switch-off the pump entirely (if no other water consumer requests water) or to at least reduce operation of the pump (if other water consumers request water or at least one water consumer requires a predefined minimum pressurisation). Thus, energy consumption of the water supply system can be reduced, as the pump is not to be operated continuously.

In another implementation variant, the time delay of the first operation sequence can be shorter than the time delay of the second operation sequence. This ensures that in the second operation sequence the operation of the valve, particularly closing the valve, is sufficiently postponed after the operation of the pump is reduced or stopped. For instance, the pressure in the water supply system and/or kinetic energy of the water is reduced sufficiently before the valve closing operation is initiated. Thus, the actuator of the valve can be designed smaller. Furthermore, other water bearing/ducting elements such as hoses and connectors can also designed structurally smaller or with smaller reserve factors, since pressure peaks traveling through the water supply system induced by pump and valve operations are reduced or even avoided. Operating the valve under less or no pressure further reduces noise of the valve operation (likely to be spread throughout the water supply system), and further reduces wear of the pump due to reduced or avoided pressure peaks.

In yet another implementation variant, the operation of the pump can include setting a pump parameter, preferably setting a speed of the pump, an output pressure of the pump and/or an output flow of the pump. For instance, this can be achieved by setting or changing an electrical input parameter in case of an electric pump, such as a voltage, current, frequency, pulse width, etc.. Likewise, in case of a hydraulic or pneumatic pump, corresponding hydraulic or pneumatic parameters can be set. The operation of the pump includes stopping the pump, driving the pump with a certain parameter or driving the pump at a maximum.

According to a second aspect to better understand the present disclosure, a water supply system for an aircraft comprises a water consumer, a pump, a valve associated with the water consumer, and a controller configured to perform the method of the first aspect or one or more of its variants. Thus, an aircraft can be equipped with such water supply system, which decreases the overall weight of the aircraft and facilitates operation of the water supply system.

In an implementation variant, the water consumer can be one or more of the following water consuming components: a lavatory, a galley, a water buffer tank, a sink, and a toilet. A lavatory and galley form monuments in an aircraft, which usually comprise one or more water consumers. For instance, a lavatory usually includes a faucet and sink as well as a toilet bowl with a flushing device, so that the faucet and the flushing device require a water supply. A galley usually comprises several galley inserts having one or more water consumers, including a faucet (and sink), a coffeemaker, a hot water dispenser, and the like. A water buffer tank can be a decentralised tank arranged to supply water to one or more water consumers usually arranged in close vicinity to the buffer tank compared to a centralised water tank in the aircraft. As a mere example, a water buffer tank can be installed in a monument to buffer a (small) amount of water to be supplied to the water consumer(s) of the monument.

In another implementation variant, the pump can be one or more of: a main pump supplying water from a central tank to the water consumer(s), an individual pump supplying water from a central tank to a single water consumer or a subgroup of water consumers, and a micropump supplying water from a water (buffer) tank to the water consumer(s).

Thus, the water supply system as disclosed herein can depend on or can be defined by the type of pump, as it refers to the pump itself as well as all components downstream of the pump. For example, in case of a main pump and a central tank in an aircraft, the water supply system comprises the entire water network in the aircraft, as it is supplied with water from the central tank by the (single) main pump. It is to be understood that for redundancy (security reasons) a second main pump may be installed.

In case of an individual pump, the water supply system comprises a section of an overall water network in the aircraft. As a mere example, an individual pump can be employed to supply water from a central tank to one or more water consumers, such as one or more monuments and/or one or more individual water consumers (usually arranged close to one another to form a subsection of the entire water supply system). Thus, the individual pump can be installed spatially close to the central tank.

In case of a micropump, the water supply system can refer to a rather small section of an entire water supply system of an aircraft. For instance, a micropump can be installed in a monument having a water buffer tank, wherein the micropump supplies one or more water consumers in the monument with water from the water buffer tank. The water buffer tank itself may be refilled from another section of the overall water supply system, for example, a high-pressure water supply system operated by a main pump or individual pump. Thus, a micropump delivers water to one or more water consumers in a spatial small area.

In a further implementation variant, the valve can be one or more of: a cross feed valve in a main water system, such as a main water distribution network, a shutoff valve in the main water supply system, an inlet buffer valve configured to fill a buffer tank, a control valve for a faucet or sink, a control valve for a galley insert, and a control valve for a toilet. A cross feed valve can be a valve interconnecting two branches of a water supply system (distribution network) and/or two branches of two different water supply systems.

According to a third aspect to better understand the present disclosure, an aircraft comprises at least one water supply system of the second aspect or one or more of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates an aircraft section having a water supply system;
- Figure 2: schematically illustrates a flowchart of a method for operating a water supply system;
- Figure 3: schematically illustrates an exemplary water supply system supplying several aircraft monuments;
- Figure 4: schematically illustrates another exemplary water supply system supplying several aircraft monuments;
- Figure 5: schematically illustrates operating states of a pump and valve during performing the method of Figure 2; and
- Figure 6: schematically illustrates an aircraft comprising a water supply system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

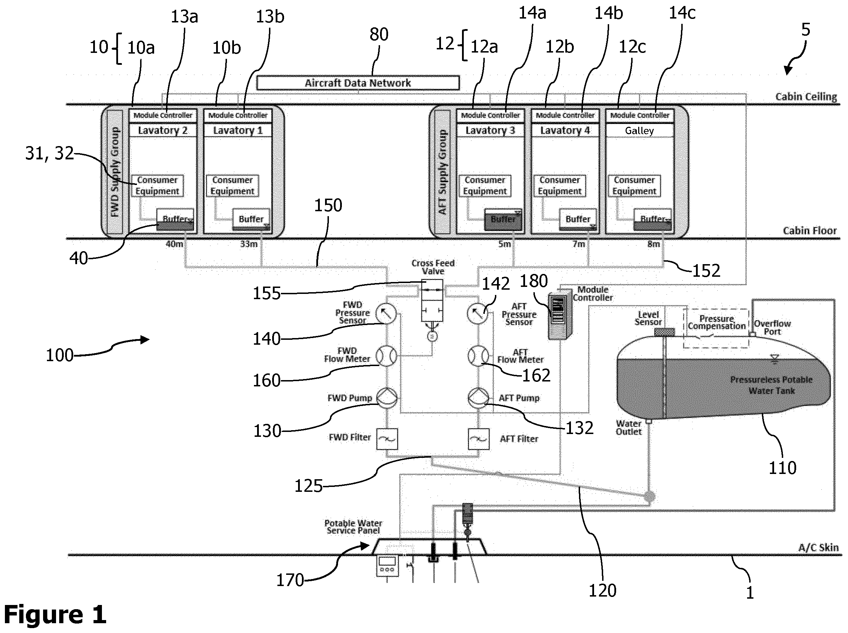

Figure 1 schematically illustrates an aircraft section 5 (here a longitudinal cross-section covering a space between a cabin ceiling, a cabin floor and an aircraft skin forming the body of the aircraft 1). Installed in the aircraft section is a schematically illustrated water supply system 100. As a mere example, the aircraft 1 or aircraft section 5 can comprise a main tank or central tank 110 storing (potable) water for all water consumers, for example, for one or two flights. The main or central tank 110 can be installed in the back of the aircraft. Alternatively, the main or central tank 110 can be installed in the middle section of the aircraft or a forward section of the aircraft.

The exemplary water supply system 100 as illustrated comprises pipes and ducts 120, 150, 152. As a mere example, a main water pipe 120 may have a branch point 125, from which a first water pipe 150 extends towards a first supply group 10 (illustrated as forward (FWD) supply group). A second water pipe 152 further extends from the branch point 125 towards a second supply group 12 (illustrated as AFT supply group). This may allow placing the central tank 110 in the middle of the aircraft (in a longitudinal direction), such as close to the wings, in order to avoid unbalancing the aircraft 1. Since the water consumers are usually arranged in particular areas in the front and aft of the aircraft, the length of the pipes 150, 152 may significantly differ. Figure 1 only exemplarily illustrates lengths of the pipes, such as 40 m for the Lavatory 2 (referred to by reference signs 10a) or only 5 m for Lavatory 3 (referred to by reference sign 12a), which reflect pipe lengths for a configuration where the central tank 110 is placed in the back of the aircraft.

The water supply system 100 can comprise, in each branch, an optional filter, a pump 130, 132, a flow metre 160, 162, and a pressure sensor 140, 142. The respective pump 130, 132 can be considered as a main pump, as it is designed in the exemplary water supply system 100 as the sole pump conveying water from the central tank 110 to the respective supply group 10, 12. In order to fill the central tank 110, a conventional service panel 170 may be provided in or at the aircraft skin, where a service vehicle can empty the tank 110 and/or can (re-) fill the tank 110, for example, at a turnaround of the aircraft 1.

Each supply group may contain more than one water consumer. Figure 1 illustrates in total five monuments consisting of four lavatories 10a, 10b, 12a, 12b and one galley 12c. On the one hand, each of these monuments can be considered as a water consumer. In the exemplary aircraft section 5 of Figure 1 each monument comprises a buffer tank 40 (only one tank 40 being provided with a reference sign for legibility of the drawing), which can be considered as the actual water consumer of the monument 10, 12 with respect to the main pump 130, 132. On the other hand, each of these monuments can include one or more water consumers, such as a faucet, a toilet flushing device, a coffeemaker, a water fountain, a shower, etc..

A controller 180 can be provided to control operation of the pumps 130, 132 as well as other devices and components of the water supply system 100 requiring control. As a mere example, the controller 180 can be configured control each of the pumps 130, 132, in order to provide sufficient water (pressure, flow, speed) to the respective branch 150, 152 of the ducting (water distribution network).

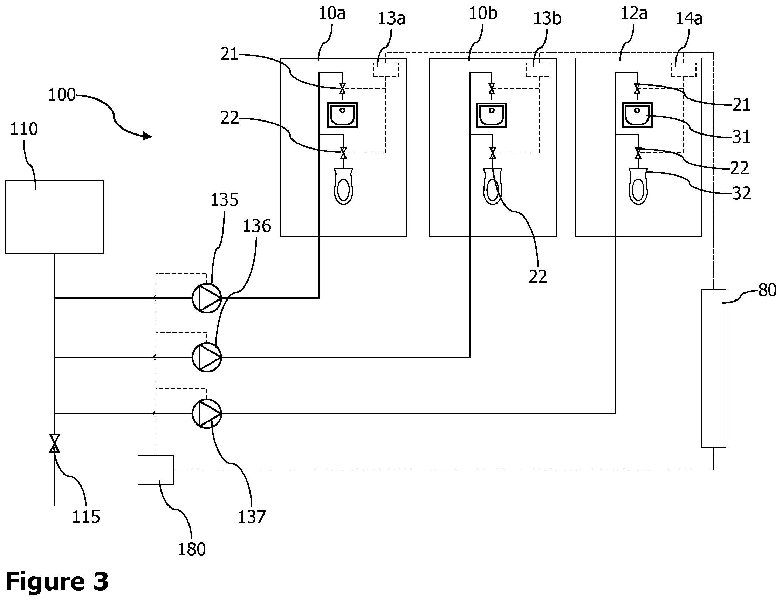

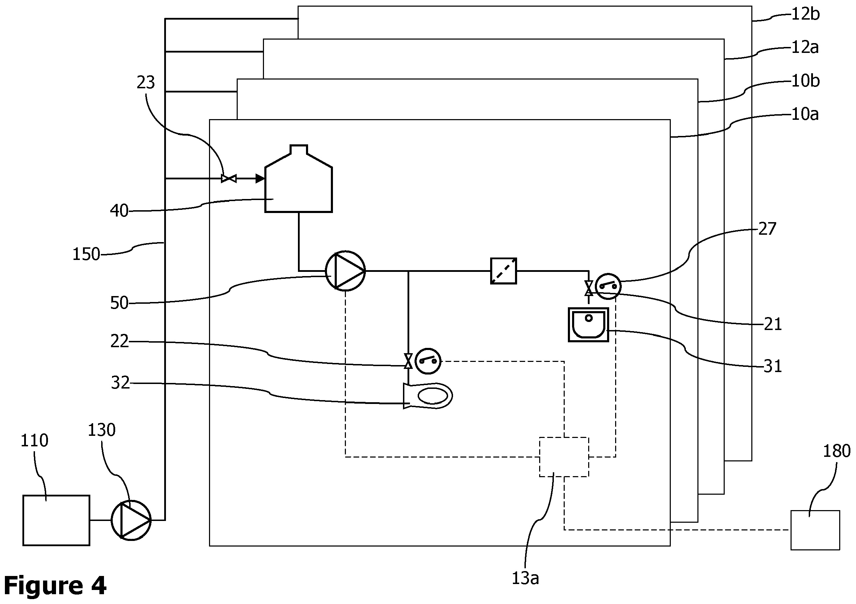

In addition, each monument 10, 12 may comprise a controller 13, 14 that allows controlling certain devices and components of the water supply system 100 associated with the respective monument 10, 12. As a mere example, the controllers 13, 14 may be configured to control the consumer equipment 31, 32. This will be explained in more detail with respect to Figures 3 and 4. The controllers 13, 14 may be connected with the controller 180, so that the controller 180 can be considered as a main controller and the controllers 13, 14 in the monuments 10, 12 can be considered as client or slave controllers. Any controller 13, 14, 180 may be connected to a data network 80, that may already be present in an aircraft. This data network 80 can be employed to transmit and receive data from and to the controllers 13, 14, 180 and/or any sensors, such as flow metres 160, 162, and/or pressure sensors 140, 142.

Thus, each monument or each supply group 10, 12 can be considered as including/forming a water supply system 100, particularly, if such monument also includes a pump. Thus, any reference to a water supply system 100 in this disclosure is not restricted to the main water supply system 100 illustrated in Figure 1. The buffer tank 40 and associated consumer equipment 31, 32 in a specific spatial area, such as a monument 10, 12, can likewise form a water supply system.

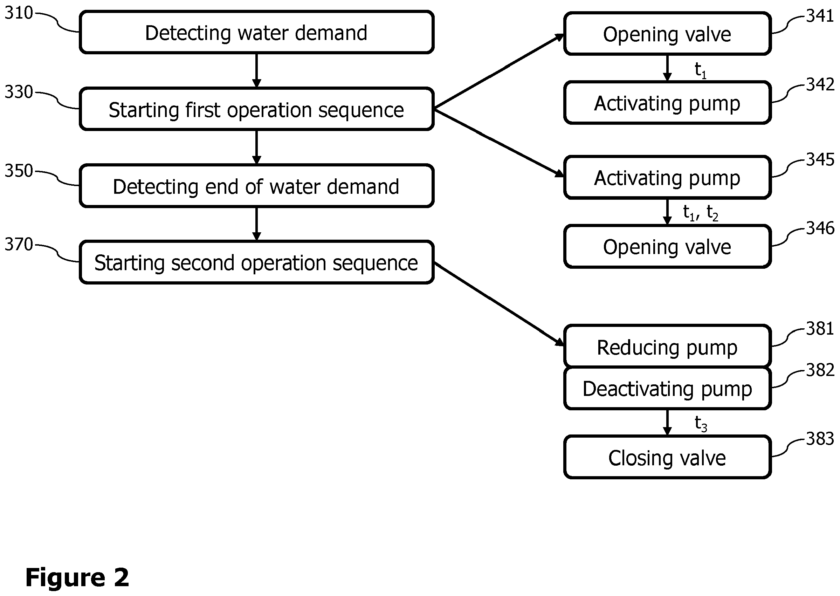

As a mere example, and as will be outlined in more detail with respect to Figure 2, each of the controllers 13, 14, 180 can be configured to perform a method for operating the water supply system 100 or a portion thereof. This may be accomplished by having processor-executable instructions stored in the controller 13, 14, 180, wherein the processor-executable instructions allow a processor of the controller 13, 14, 180, when executing the instructions, to perform the method.

Figure 2 schematically illustrates a flowchart of a method for operating a water supply system 100. The method starts, in step 310, with detecting a demand for water supply at a water consumer. This detection may be performed by the main controller 180 and/or by a monument controller 13, 14. For instance, to detect a demand, a user may press a button or open a faucet or the like, which triggers the flow of water. As a mere example, the user may press a button to flush a toilet or an infrared sensor recognises hands to use a faucet, or the like.

When detecting the demand for water supply, in step 330, a first operation sequence of a pump and a valve associated with the water consumer is started. With respect to the example illustrated in Figure 1, the demand could be triggered by one of the buffer tanks 40 falling low and requiring a refill. This can, for example, be detected by means of a level sensor or an equipment activation counter together with a discrete buffer full sensor. The controller 180 could be informed from the respective monument controller 13, 14, and can then operate the respective pump 130, 132, depending on the branch 150, 152, to which the buffer tank 40 is fluidly connected. The valve can be an inlet buffer valve 23 (Figure 4).

Since the pump 130, 132 is operated in the first operation sequence after detecting a demand for water supply, the pump 130, 132 can also be operated in dependence on the water consumer requesting water and/or a location of the water consumer relative to the pump 130, 132. As a mere example, the length of the pipe 150, 152 may form a basis for operating the pump 130, 132, as a longer pipe 150, 152 requires a higher output of the pump 130, 132, in order to compensate for pressure and flow speed losses along the pipe 150, 152. The operation of the pump 130, 132, such as a speed of the pump 130, 132, may further depend on parameters like a required volume of water, e.g. to re-fill a buffer tank 40, or a type of equipment that requests the water.

Furthermore, the controller 180 could also operate the other pump 130, 132, in case there is a failure in one of the pumps 130, 132. In this case, the controller 180 could operate a cross feed valve 155 allowing a cross feed between both branches 150, 152, in accordance with the first operation sequence.

The method further comprises, in step 350, detecting an end of the demand for water supply at the water consumer, and in step 370, starting a second operation sequence of the pump and the valve.

The first operation sequence as well as the second operation sequence includes a time delay between operation of the pump and operation of the valve. This allows bringing (or maintaining) the pump 130, 132 into an operating state optimal for operation of the valve. The first operation sequence, for example, can comprise opening the valve in step 341 and activating the pump in step 342 after a time delay t₁. Alternatively, the first operation sequence can comprise activating the pump in step 345, and opening the valve in step 346 after a time delay t₁, t₂. In both optional first operation sequences the time delay can be the same (t₁) or different time delays may be employed (t₁ and tz).

The second operation sequence can include reducing the operation of the pump in step 381 and/or deactivating the pump in step 382. Thereafter (particularly after a time delay t₃) the valve is closed in step 383.

This is now explained in more detail with respect to the exemplary water supply system 100 illustrated in Figure 3. This water supply system 100 can likewise be installed in an aircraft section 5 as the example illustrated in Figure 1. Components in both drawings, which are the same or have the same functionality, are provided with the same reference signs. A redundant description of such components is omitted for brevity. Thus, as a mere example, a central water tank 110 can be installed.

The water supply system 100 comprises three branches (ducts) which are each operated by a corresponding pump 135, 136 and 137. This allows optimising the respective pump 135, 136, 137 for the water consumers 10a, 10b, 12a connected to each branch. These water consumers 10a, 10b, 12a are exemplarily illustrated as one monument 10, 12 per branch.

Each monument 10, 12 is a lavatory, but could likewise be a galley or other water consuming unit in the aircraft 1. As can be derived from Figure 3, each branch of the water supply system 100 is fluidly coupled to a control valve 21 for a faucet or sink 31 and a control valve 22 for a toilet 32. Operation of each of these valves 21, 22 may be triggered/initiated by a user, for example by pressing a corresponding button or turning a knob or the like. This may be recognised (detection step 310) by a monument controller 13a, 13b, 14a, which transmits a corresponding detection signal to main controller 180.

Either monument controller 13, 14 or main controller 180 can then perform the method illustrated in Figure 2. For instance, the control valve 21 for a faucet can be opened in a corresponding step 341. After a time delay t₁ the pump 135, 136, 137 of the associated branch can be activated in step 342. Thus, the valve 21 can be operated without water pressure in the associated branch/duct.

Likewise, the pump 135, 136, 137 of the associated branch can be activated in a step 345. After a time delay t₁ or t₂ the control valve 22 for the toilet 32 can be opened in step 346. This allows pressurising the water in the associated branch, in order to achieve a quick toilet flush, as flushing a toilet 32 requires a particular water pressure to achieve the required cleaning effect. It is to be understood that the time delay t₂ between steps 345 and 346 may be shorter than between steps 341 and 342. This allows achieving a pre-pressurised water supply system 100, but still operating the valve 22 not at the maximum pressure in the water supply system 100. Of course, both time delays t₁ and t₂ can be the same.

Figure 4 schematically illustrates another exemplary aircraft section 5 and associated water supply system 100. The illustrated aircraft section 5 comprises a plurality of schematically drawn monuments 10, 12 (Figure 4 illustrates four monuments 10a, 10b, 12a, 12b). In at least one of these monuments 10, 12, a water buffer tank 40 is installed. The water buffer tank 40 can be filled from a branch 150 connecting the monument 10, 12 with a central water tank 110 via pump 130.

A main controller 180 may perform the method according to Figure 2, including detecting that the water buffer tank 40 requires refilling, i.e. a demand of water supply occurs. Thus, the first and second operation sequence can be performed by the main controller 180 with respect to the main pump 130 and an inlet buffer valve 23. This allows filling the buffer tank 40 even with a high pressure (such as approximately 15 bar), and, hence, in a fast manner, but operating the valve 23 not under full high pressure.

The monument 10a itself can be considered as representing a water supply system 100, as it includes the buffer tank 40 and a micropump 50 supplying water from buffer tank 40 to the water consumers 31, 32. Each of the water consumers 31, 32 is equipped with a respective control valve 21, 22, which, when in an open state, delivers water from the buffer tank 40 via the micropump 50 to the respective consumer 31, 32.

Figure 4 exemplarily illustrates a sensor 27 (only one being provided with a reference sign for legibility of the drawing). Such sensor 27 can be an infrared sensor arranged at sink 31 and configured to detect the hands of a user, in order to trigger the demand for water supply at water consumer 31. A controller 13a can perform the method according to Figure 2 and starts in step 310 by detecting a signal of sensor 27. The controller 13a associated with the monument 10a can then further perform the first and second operating sequences with respect to the valve 21 and micropump 50. Thus, this water supply system (delimited by the monument 10, 12) can be controlled independent of any main controller 180.

Likewise, toilet 32 can be operated (flushed) by manipulating a corresponding sensor or button. The monument controller 13a, in this case, performs the method in accordance with Figure 2, and with respect to control valve 22 and the micropump 50.

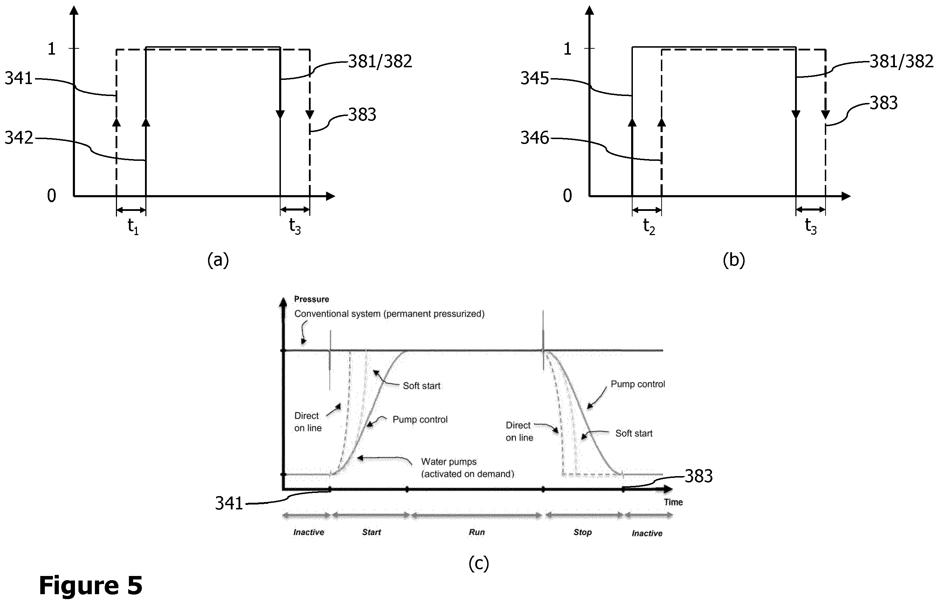

Figure 5 schematically illustrates operating states of a pump and valve during performing the method of Figure 2. Specifically, drawings (a) and (b) in Figure 5 illustrate the operation of the valve as a broken line and the operation of the pump as a solid line.

The drawings (a) and (b), respectively, illustrate the first operation sequence in accordance with the alternatives in step 341, 342 and 345, 346. In drawing (a) the first operation sequence begins with opening in the valve (step 341), while the pump is not operating (state 0). After the time delay t₁ step 342 is performed, i.e. the operation of the pump starts (activation of the pump). In drawing (b) the first operation sequence begins with pressurising the water duct, i.e. activating the pump in step 345. After the time delay t₂ the valve is opened in step 346.

The second operation sequence in both cases (drawings (a) and (b) in Figure 5) is the same: when no demand for water is detected (step 350), the pump is deactivated (step 382) and after the time delay t₃ the valve is closed 383.

In case of drawing (a) both operation sequences allow operating the valve without pressure. Particularly, the second operation sequence, i.e. closing the valve, is possible without pressure or at least with reduced pressure in the water system 100, so that an actuator of the valve does not have to act against the water pressure. In case of drawing (b) the opening of the valve in the first operation sequence may be performed under pressure, but here the actuator of the valve can act in the direction of the water pressure, so that the water pressure even facilitates opening the valve.

Drawing (c) of Figure 5 illustrates different scenarios. The uppermost line shows a conventional system, which is permanently pressurised. Opening and closing the valve (exemplary steps 341, 383) would occur under full pressure in the conventional system, which has been illustrated by the respective pressure peaks. This requires an actuator of the valve that can act against the water pressure. In addition, wear of the valve and/or actuator will be high.

The bell-shaped curve (as solid line as well as broken lines) illustrate the scenario of the present disclosure, where the valve can be operated without pressure or with reduced pressure. Even a fast increase in pressure (referred to as "Direct on line") allows operating the valve under less pressure, but facilitating a fast start of flow of water at the water consumer.

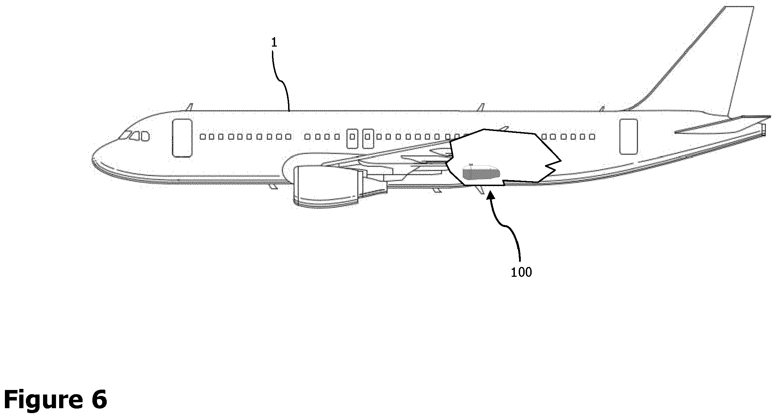

Figure 6 schematically illustrates an aircraft 1 comprising at least one water supply system 100 of one or more of Figures 1, 3 and 4.

It is to be understood that any controller 13, 14, 180 can perform the method, in accordance with Figure 2, with respect to any pump 50, 130, 132, 135, 136, 137 and any valve 21, 22, 23, 115, 155 even it is not explicitly described in the present disclosure.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A method for operating a water supply system (100) for an aircraft (1), the method comprising:
detecting (310) a demand for water supply at a water consumer (10, 12, 31, 32);
starting (330) a first operation sequence of a pump (50, 130, 132) and a valve (21, 22, 155) associated with the water consumer;
detecting (350) an end of the demand for water supply at the water consumer; and
starting (370) a second operation sequence of the pump and the valve,
wherein each of the first and second operation sequence includes a time delay between operation of the pump and operation of the valve.

2. The method of claim 1, wherein the time delay is set to operate the valve when the pump is operated with a reduced capacity.

3. The method of claim 1 or 2, wherein the second operation sequence includes reducing (381) operation of the pump or deactivating (382) the pump, and closing (383) the valve after the time delay.

4. The method of one of claims 1 to 3, wherein the first operation sequence includes opening (341) the valve and activating (342) the pump after the time delay, or
wherein the first operation sequence includes activating (345) the pump and opening (346) the valve after the time delay.

5. The method of one of claims 1 to 4, wherein the time delay of the first operation sequence is shorter than the time delay of the second operation sequence.

6. The method of one of claims 1 to 5, wherein the operation of the pump includes setting a pump parameter, preferably setting a speed of the pump, an output pressure of the pump and/or an output flow of the pump.

7. The method of one of claims 1 to 6, wherein in the water supply system comprises a plurality of valves, and the second operation sequence involves operating the plurality of valves by opening at least one of the plurality of valves, while the pump is still operating, wherein one valve of the plurality of valves is always in at least a partially open configuration.

8. A water supply system (100) for an aircraft (1), the water supply system comprising:
a water consumer (10, 12, 31, 32);
a pump (50, 130, 132);
a valve (21, 22, 155) associated with the water consumer; and
a controller (13, 14, 180) configured to perform the method of one of claims 1 to 7.

9. The water supply system (100) of claim 8, wherein the water consumer is one or more of the following water consuming components: a lavatory (10, 12a, 12b), a galley (12c), a water buffer tank (40), a sink (31), and a toilet (32).

10. The water supply system (100) of claim 8 or 9, wherein the pump is one or more of: a main pump (130, 132) supplying water from a central tank (110) to the water consumer, an individual pump (135, 136, 137) supplying water from a central tank (110) to the water consumer (10, 12), and a micropump (50) supplying water from a water tank (40) to the water consumer (31, 32).

11. The water supply system (100) of one of claims 8 to 10, wherein the valve is one or more of: a cross feed valve (155) in a main water system (125, 150, 152), a shutoff valve (115) in the main water system, an inlet buffer valve (23) configured to fill a buffer tank (40), a control valve (21) for a faucet or sink (31), a control valve for a galley insert, and a control valve (22) for a toilet (32).

12. An aircraft (1), comprising:
at least one water supply system (100) of one of claims 8 to 11.
